# EUROPEAN PATENT SPECIFICATION

(11) **EP 1 874 025 B1**
(45) Date of publication and mention of the grant of the patent: **31.05.2017**
(21) Application number: 07110813.8
(22) Date of filing: 21.06.2007
(51) Int. Cl.: H04N 1/00

(54) **Image processing apparatus, image processing method, and storage medium**
Bildverarbeitungsvorrichtung, Bildverarbeitungsverfahren und Speichermedium
Appareil et procédé de traitement d'image, et support de stockage

(30) Priority: 26.06.2006 JP 2006175020
(43) Date of publication of application: 02.01.2008
(60) Divisional application: 12188566.9
(73) Proprietor: Canon Kabushiki Kaisha, Ohta-Ku, Tokyo 146-8501 (JP)
(72) Inventor: Ookuma, Satoshi, Ohta-ku, Tokyo (JP)
(74) Representative: Hitching, Peter Matthew

(56) References cited:
- WO-A-2005/114477
- JP-A- 2006 085 376
- US-A1- 2002 126 306
- US-A1- 2006 053 042
- US-B1- 6 856 415

## Description

### BACKGROUND OF THE INVENTION

### Field of the Invention

The present invention relates to an image processing apparatus configured to access a web server to acquire data from the web server and a method for controlling the image processing apparatus.

### Description of the Related Art

In recent years, a multifunction image processing apparatuses have been introduced which have multiple functions, such as copy, facsimile, printer, and scanner functions, and which are capable of storing scanned image data on a hard disk or other storage device.

To operate multiple functions of a multifunction image processing apparatus, it is useful that an operation panel has a sufficiently large size. For example, a user operates the operation panel to perform settings for the scanner and printer functions. Furthermore, it is useful to display an operation screen that enables a user to control a remote device via a network and display web contents (a web page) acquired by a web browser.

As discussed in Japanese Patent Application Laid-Open No. 2006-85376, a web browser can be installed on an image processing apparatus which includes copy, scanner, and printer functions. The web browser can access a web server via the Internet and display an acquired web page on an operation panel. Furthermore, a printer unit of the image processing apparatus can print a web page displayed on the operation panel according to an instruction generated by a user.

When an image processing apparatus including a printer function can directly acquire and print a web page, a user is not required to use a web browser installed on a personal computer (PC) or other information processing apparatus to acquire and temporarily store the web page, as in the case of a conventional method.

However, according to the above-described conventional method, every time a user desires to display or print a web page that has been acquired previously from a web server, the user is required to access the web server again to acquire the web page. That is, the conventional image processing apparatus cannot store a web page and therefore cannot display and print the stored web page.

US 6,856,415 discloses a method for interactively acquiring a page in a network by providing a user interface element, such as a window, for collecting the page in the network, interactively acquiring the page from the network, and inserting the page in the window. A content acquisition facility resident on a client machine can be employed to generate the window. Further, a URL list can be interactively created by launching a browser, generating another user interface element with a URL collection facility, acquiring the URL corresponding to a selected page in the network during browsing, and inserting the URL in the user interface element to create the URL list. Subsequently, the URL list can be imported into a document. The content associated with the URL can then be dynamically, automatically retrieved and placed in the document.

US 2002/0126306 concerns a print instruction program and method for allowing a network terminal device to send print instructions to a PDF direct-printing printer in a communications network in an efficient and advantageous manner. The program and method includes the capability to obtain PDF file name and network address data from the location of a mouse pointer in a web browser screen. The file name and address data can be stored locally on the network terminal device, preferably in a list format. The program and method also provides for the display and operation of a direct print menu in association with a click on a control button of the mouse. The program and method allows the PDF file name and address data to be sent to the network-attached printer, either singly or as part of a list and either as a network address or as an actual file.

### SUMMARY OF THE INVENTION

The present invention provides an image processing apparatus configured to acquire a web page that can not only print the acquired web page but also save the web page data, and can further selectively perform processing desired by a user.

The present invention in its first aspect provides an image processing apparatus as specified in claims 1 to 8. According to a second aspect of the present invention there is provided a method for controlling an image processing apparatus as specified in claim 9.

Further features of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principle of the invention.
Fig. 1 illustrates a configuration of a network according to an exemplary embodiment of the present invention.
Fig. 2 illustrates an internal configuration of an image processing apparatus according to an exemplary embodiment of the present invention.
Fig. 3 is a block diagram illustrating a configuration of an operation unit of the image processing apparatus according to an exemplary embodiment of the present invention.
Fig. 4 illustrates a hardware configuration of a scanner and a printer according to an exemplary embodiment of the present invention.
Fig. 5 illustrates an exemplary hypertext markup language (HTML) description indicating a link to a portable document format (PDF) file, as a web content acquired from a web server.
Fig. 6 illustrates an operation screen displayed on a liquid crystal display (LCD) of the image processing apparatus according to an exemplary embodiment of the present invention.
Fig. 7 illustrates an operation screen displayed on the LCD of the image processing apparatus according to an exemplary embodiment of the present invention.
Fig. 8 illustrates another operation screen.
Fig. 9 illustrates another operation screen displayed on the LCD of the image processing apparatus.
Fig. 10 illustrates another operation screen displayed on the LCD of the image processing apparatus according to an exemplary embodiment of the present invention.
Fig. 11 is a flow chart illustrating operations performed by the image processing apparatus according to an exemplary embodiment of the present invention.
Fig. 12 illustrates an exemplary HTML description indicating a link to a PDF file, as a web content acquired from a web server.
Fig. 13 illustrates an operation screen displayed on the LCD of the image processing apparatus according to a first exemplary embodiment of the present invention.
Fig. 14 illustrates another operation screen displayed on the LCD of the image processing apparatus according to an exemplary embodiment of the present invention.
Fig. 15 illustrates a further operation screen displayed on the LCD of the image processing apparatus according to an exemplary embodiment of the present invention.
Fig. 16 is a flow chart illustrating operations performed by the image processing apparatus according to a second exemplary embodiment of the present invention.
Fig. 17 illustrates an exemplary HTML description indicating a link to a PDF file, as a web content acquired from a web server.
Fig. 18 illustrates an operation screen displayed on the LCD of the image processing apparatus according to an exemplary embodiment of the present invention.
Fig. 19 is a flow chart illustrating processing performed by the image processing apparatus according to a third exemplary embodiment of the present invention.

### DETAILED DESCRIPTION OF THE EMBODIMENTS

The following description of exemplary embodiments is merely illustrative in nature and is in no way intended to limit the invention, its application, or uses.

Processes, techniques, apparatus, and systems as known by one of ordinary skill in the art are intended to be part of the enabling description where appropriate.

For example, certain circuitry for image processing, data processing, and other uses may not be discussed in detail. However these systems and the methods to fabricate these system as known by one of ordinary skill in the relevant art is intended to be part of the enabling disclosure herein where appropriate.

It is noted that throughout the specification, the same reference numerals and letters refer to similar items in each of the following figures, and thus once an item is described in one figure, it need not be described again for subsequent figures.

Exemplary embodiments will now be described in detail with reference to the drawings.

### First Exemplary Embodiment

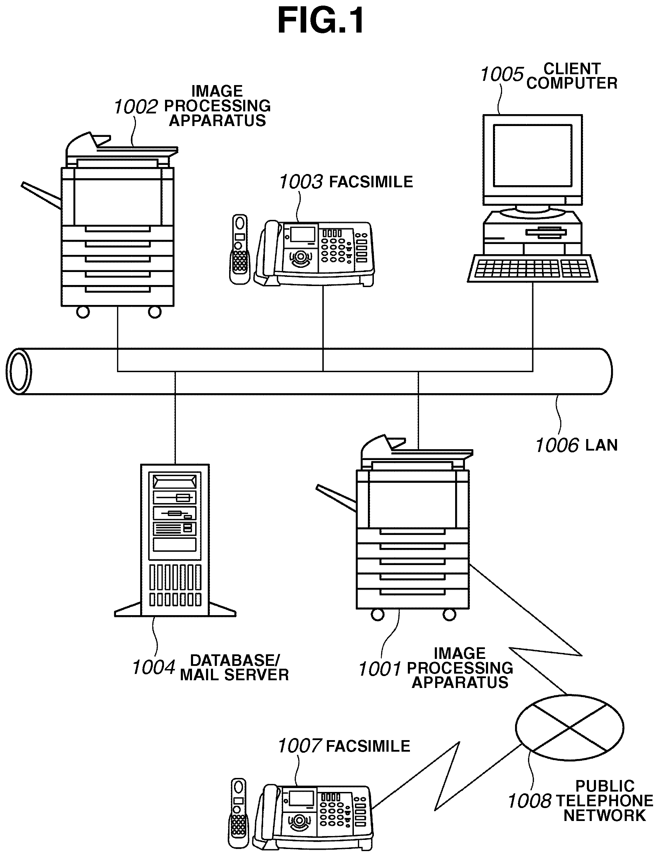

Fig. 1 illustrates a network system including an image processing apparatus according to an exemplary embodiment of the present invention. In the exemplary embodiment, the description is made referring to a copying machine having data transmission function as an example of an image processing apparatus. However, a printing apparatus, a facsimile apparatus, or a multifunction peripheral can be used as the image processing apparatus as alternatives.

An image processing apparatus 1001, an image processing apparatus 1002, a facsimile apparatus 1003, a database/mail server 1004, and a client computer 1005 are in communication with one another via a local area network (LAN) 1006, such as an Ethernet^{®}.

The image processing apparatus 1002 includes functions similar to those of the image processing apparatus 1001.

The image processing apparatus 1001 is in communication with a facsimile 1007 via a public telephone line 1008. The image processing apparatus 1001 includes a copy function, a facsimile function, a document image reading function, and a data transmission function for transmitting the read image data to other apparatus on the LAN 1006.

Furthermore, the image processing apparatus 1001 includes a page description language (PDL) print function. The image processing apparatus 1001 can receive a PDL image from a computer connected to the LAN 1006 and can print the received PDL image.

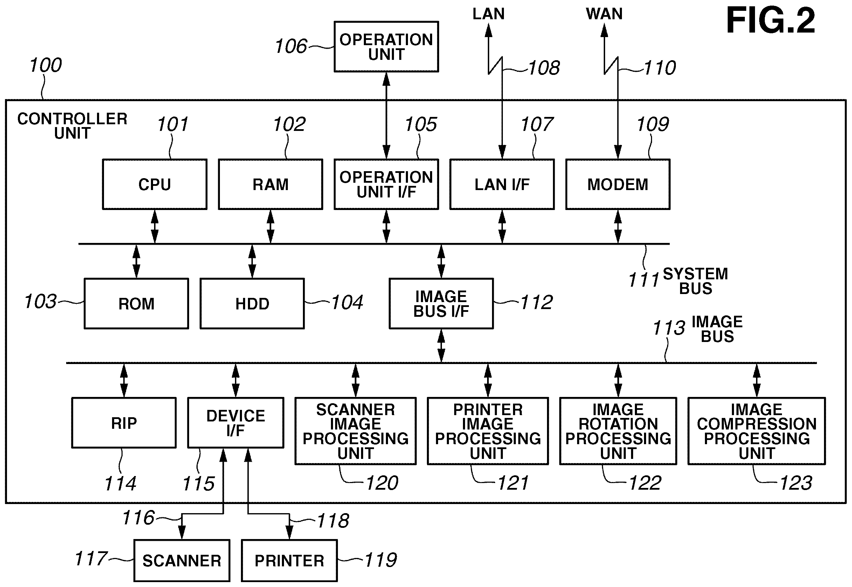

The image processing apparatus 1001 can store both a read image and a PDL image from a computer connected to the LAN 1006 in a box area of the hard disk 104 (refer to Fig. 2) of the image processing apparatus 1001. The image processing apparatus 1001 can print an image stored in the box area and can transmit the stored image to other apparatuses.

The image processing apparatus 1001 receives data read by the image processing apparatus 1002 via the LAN 1006, and stores the received data on the hard disk 104 of the image processing apparatus 1001. The image processing apparatus 1001 receives an image from a database server 1004 via the client computer 1005 and the LAN 1006, and stores the received data in the image processing apparatus 1001 to print and output the stored data.

A facsimile 1003 can receive data read by the image processing apparatus 1001 via the LAN 1006 and transmit the received data via a telephone line.

The database/mail server 1004 is a server apparatus that includes a function for receiving data read by the image processing apparatus 1001 via the LAN 1006, a function for storing the received data in a database, and a function for transmitting the data via an electronic mail.

The client computer 1005 is in communication with the database/mail server 1004 and can acquire desired data from the database/mail server 1004 and display the acquired data. The client computer 1005 can receive data read by the image processing apparatus 1001 via the LAN 1006 and can process and edit the received data. The database/mail server 1004 can function as a web server which can process hypertext transfer protocol (HTTP). In this case, the database/mail server 1004 stores web contents described in hypertext markup language (HTML). A web browser of the client computer 1005 or each image processing apparatus (1001, 1002) having a web browser function can display the web contents stored in the database/mail server 1004.

The facsimile 1007 can receive, via the public line 1008, data read by the image processing apparatus 1001. The facsimile 1007 can print and output the received data.

Fig. 2 illustrates an internal configuration of each of the image processing apparatuses 1001 and 1002 according to the present exemplary embodiment.

The image processing apparatus, as illustrated in Fig. 2, includes a controller unit 100 that can communicate with a scanner 117 and a printer 119 as well as a LAN 108 and a public line (WAN) 110.

The controller unit 100 has a copy function and a printer function for printing data supplied from an external device via the LAN 108. The controller unit 100 performs control of input and output of image information and device information, in addition to control of the entire apparatus. The controller unit 100 has a communication function (including a facsimile function) performed via the public telephone network (WAN) 110.

The controller unit 100 includes a central processing unit (CPU) 101 that executes various control programs.

The CPU 101 activates the system according to a boot program stored in a read-only memory (ROM) 103. The CPU 101 reads a control program from the hard disk apparatus (HDD) 104 and performs predetermined processing with a random access memory (RAM) 102 functioning as a work area.

The HDD 104 stores image data in addition to the above-described various control programs. The CPU 101 is in communication with the RAM 102, the ROM 103, the HDD 104, an operation unit interface (operation unit I/F) 105, a LAN interface (LAN I/F) 107, a modem 109, and an image bus interface (image bus I/F) 112, via a system bus 111.

The operation unit I/F 105 is an interface between the controller unit 100 and an operation unit 106. The operation unit I/F 105 transfers image data to be displayed on the operation unit 106 and transfers a signal generated from the operation unit 106 by a user to the CPU 101.

The operation unit 106 includes a display unit configured to display a current setting state of respective image processing functions and display an information input screen configured to enable a user to input setting information relating to each function. Furthermore, the operation unit 106 includes an input unit equipped with operation keys that enable a user to input setting information for each function.

The LAN I/F 107, connected to the LAN 108, is used to perform input and output of information via the LAN 108. In the case where the LAN I/F 107 is connected to a web server via the LAN 108, the LAN I/F 107 can acquire web contents from the web server via the LAN 108. Furthermore, the LAN I/F 107 can access the Internet via a proxy server in the LAN 108, to acquire web contents from the web server.

The modem 109, connected to the public line (WAN) 110, is used to perform input and output of information via the public line 110.

The image bus I/F 112 is a bus bridge disposed between the system bus 111 and an image bus 113 to convert a structure of data.

The image bus 113 is a peripheral component interconnect (PCI) bus or Institute of Electrical and Electronic Engineers (IEEE)1394 which can transfer image data at a high speed. A raster image processor (RIP) 114, a device interface (device I/F) 115, a scanner image processing unit 120, a printer image processing unit 121, an image rotation processing unit 122 and an image compression processing unit 123 are in communication with one another via the image bus 113.

The RIP 114 rasterizes a page description language (PDL) code into a bitmap image.

The device I/F 115 performs synchronous/asynchronous conversion processing on image data between the controller unit 100 and the image input/output device (i.e., the scanner 117 and the printer 119). The device I/F 115 is connected to the scanner 117 via a cable 116 and connected to the printer 119 via a cable 118.

The scanner image processing unit 120 performs correction, modification, and editing processing on image data input by the scanner 2070.

The printer image processing unit 121 performs printer correction and resolution conversion processing on print image data (output image data). The image rotation processing unit 122 rotates image data. The image compression processing unit 123 performs Joint Photographic Experts Group (JPEG) compression/expansion processing on multivalued image data and performs Joint Bi-level Image Experts Group (JBIG), Modified Modified Read (MMR), or Modified Read (MR) compression/expansion processing on binary image data.

As described above, the CPU 101 of the controller unit 100 can perform control of the access of various devices connected to the system bus 113 according to each control program. The CPU 101 can read image information from the scanner 117 via the device I/F 115. After predetermined processing is performed on the read image information, the CPU 101 outputs the processed image information to the printer 119 via the device I/F 115.

Furthermore, the CPU 101 performs image conversion processing on the image data and document files acquired via the LAN I/F 107 or the modem 109. The CPU 101 stores the converted image data on the HDD 104 or outputs the converted image data to the printer 119.

The CPU 101 can control the operation unit 106 in the following manner.

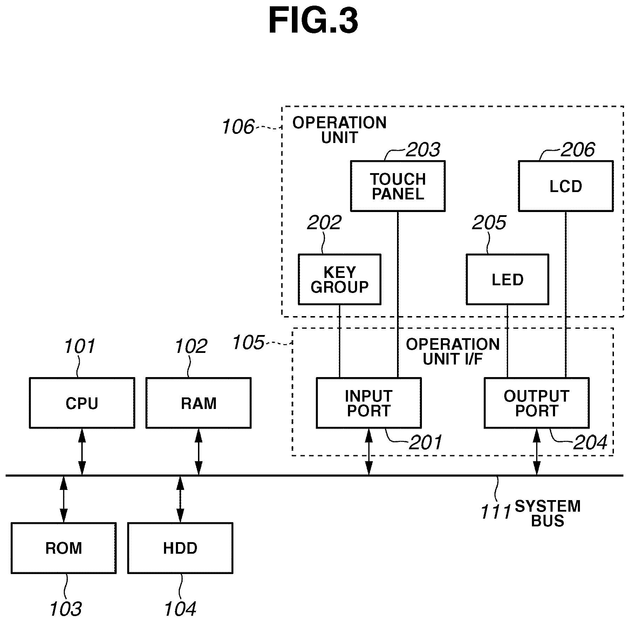

Fig. 3 illustrates an exemplary configuration of the operation unit 106 and respective peripheral devices illustrated in Fig. 2.

The operation unit 106 includes a hard key group 202, a touch panel 203, a light-emitting diode (LED) 205, and a liquid crystal display (LCD) 206. The key group 202 and the touch panel 203 are connected to the CPU 101 via an input port 201 of the operation unit I/F 105. When a user presses the touch panel 203, positional information is input via the input port 201 to the CPU 101. When a user presses any hard key of the key group 202, the key information is input via the input port 201 to the CPU 101.

The LED 205 and the LCD 206 of the operation unit 106 are connected to the CPU 101 via an output port 204 of the operation unit I/F 105. The CPU 101 controls turning on/off of the LED 205 and the display of the LCD 206. The touch panel 203 is a pressure-sensitive transparent sheet-like device disposed on the LCD 206. When a user touches a virtual icon (i.e., an operation object) displayed on the LCD 206, the touch panel 203 detects the position coordinates. The CPU 101 can recognize an operation object instructed by the user based on the object currently displayed on the LCD 206 and the position coordinate information.

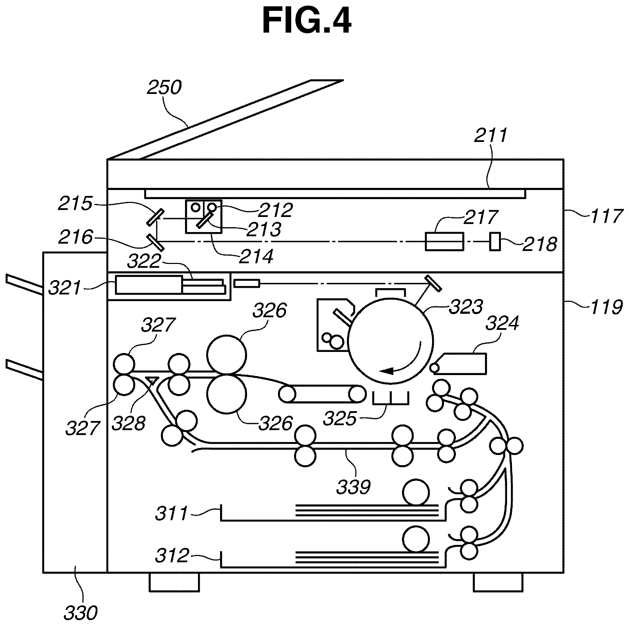

Fig. 4 illustrates an exemplary hardware configuration of the scanner 117 and the printer 119 of the image processing apparatus 1001 illustrated in Fig. 1.

The scanner 117 and the printer 119 are integrally configured as illustrated in Fig. 4. The scanner 117 includes a document feeding unit 250 configured to successively supply documents one by one in the order of stacking onto a platen glass 211 and discharge each read document from the platen glass 211 to a discharge tray (not illustrated) upon completing a reading operation of each document.

When a document is supplied on the platen glass 211, the scanner 117 turns on a lamp 212 and starts moving a moving unit 214. The moving unit 214 is configured to perform an operation for reading and scanning the document placed on the platen glass 211 while it moves.

During the reading/ scanning operation, light reflected from the document reaches a charge-coupled device (CCD) image sensor (hereinafter, referred to as CCD) 218 via mirrors 213, 215, and 216 and a lens 217. An image on the document is formed on an imaging plane of the CCD 218. The CCD 218 converts the image on the imaging plane into an electrical signal. The electrical signal is subjected to predetermined processing and input to the controller unit 100.

The printer 119 includes a laser driver 321 configured to drive a laser emitting unit 322 according to image data input from the controller unit 100. Thus, the laser emitting unit 322 emits a laser beam corresponding to the image data. A photosensitive drum 323 is irradiated with the scanning laser beam so that an electrostatic latent image can be formed on a surface of the photosensitive drum 323.

The electrostatic latent image can be visualized as a toner image when a developing device 324 supplies toner thereon. A recording sheet can be fed between the photosensitive drum 323 and a transfer unit 325 from each cassette (311 or 312) via a conveyance path in synchronization with laser emission timing. The toner image on the photosensitive drum 323 can be transferred onto a recording sheet fed by the transfer unit 325.

The recording sheet with the toner image transferred thereon is sent by a carrying belt to a fixing roller pair (i.e. , a heating roller and a pressing roller) 326. The fixing roller pair 326 can apply a predetermined amount of heat to the recording sheet and can press the surface of the recording sheet to fix the toner image formed thereon. After the recording sheet has passed through the fixing roller pair 326, a discharge roller pair 327 discharges the recording sheet to a sheet discharging unit 330. The sheet discharging unit 330 is a sheet processing apparatus that can perform sort, staple, and other post-treatment if required.

The image processing apparatus 1001 can operate in a two-sided recording mode, according to which a recording sheet is once carried to the discharge roller pair 327 and then carried in a reverse direction by the discharge roller pair 327 which rotates in the opposite direction. A flapper 328 guides the recording sheet carried in the reverse direction to a re-feeding conveyance path 339. The recording sheet carried along the re-feeding conveyance path 339 is again fed between the photosensitive drum 323 and the transfer unit 325 at the above-described timing. Then, a toner image is transferred to a back surface of the recording sheet.

In the present exemplary embodiment, the image processing apparatus 1001 acquires web contents from a web server via a network and can change an instruction (or control) applied to a PDF file linked to the acquired web contents based on a control instruction being set for the PDF file.

A web server can provide web contents described in HTML. A web browser interprets an HTML file (i.e., a file described with HTML) and causes the LCD 206 to display the provided web contents.

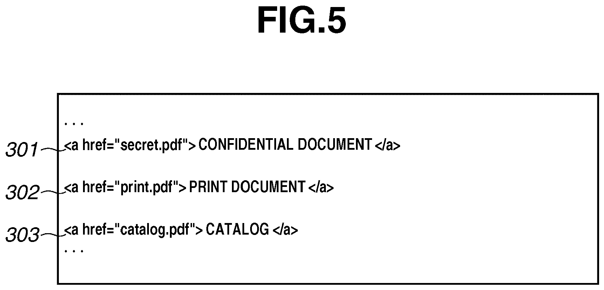

Fig. 5 illustrates exemplary HTML description including text strings 301 through 303 each including a link to a PDF file.

More specifically, each text string illustrated in Fig. 5 includes an <a> tag (anchor tag) which indicates a link to a PDF file.

For example, according to the text string 301, a displayed text "confidential document" is allocated as a link to a PDF file named "secret.pdf.". Similarly, according to the text string 302, a displayed text "print document" is allocated as a link to a PDF file named "print.pdf.". According to the text string 303, a displayed text "catalog" is allocated as a link to a PDF file named "catalog.pdf.".

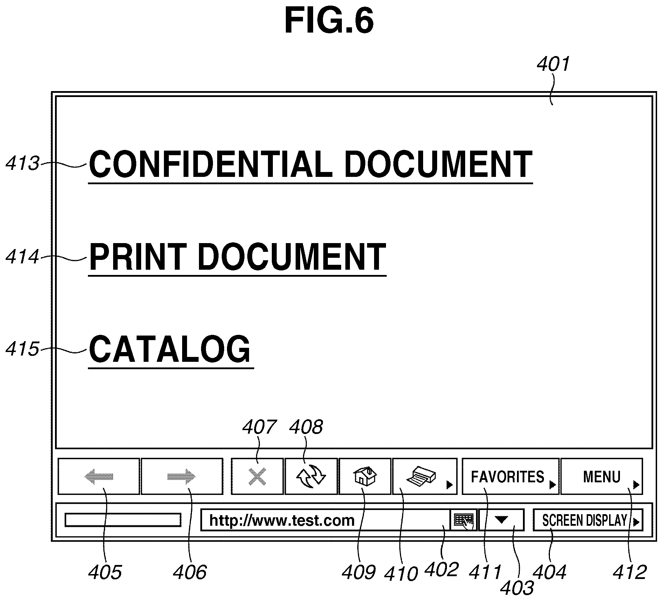

Fig. 6 illustrates an exemplary operation screen displayed on the LCD 206 of the image processing apparatus, as a web browser operation screen that displays web contents described according to the HTML files illustrated in Fig. 5.

A content display area 401 is used for displaying web contents acquired from a web server which have been rasterized or shaped based on interpreted HTML files.

A uniform resource locator (URL) input/display area 402 displays a URL address that indicates a storage destination of the web contents currently displayed in the content display area 401. When a user selects the URL input/display area 402, a URL designation input screen is displayed. If the user inputs a desired URL address, web contents of a web server designated by the input address can be displayed.

A user can press a "URL input history display" button 403 to display a screen that indicates URL addresses having been previously input by a user in the URL input display area 402. In other words, a user can easily perform an operation for designating a URL address which has been previously instructed.

A user can press a "screen display switching" button 404 to change the size of the content display area 401 or to display a screen for switching display/non-display of buttons 405 through 412.

A "back" button 405 enables a user to retroactively display the web contents which have been previously displayed in the content display area 401 in a direction opposite to the displayed order.

After a user has performed the display of the web contents in the backward direction with the "back" button 405, the user can press a "forward" button 406 to return the web contents displayed in the content display area 401 in a forward direction.

A "stop" button 407 enables a user to suspend an operation for reading web contents from a web server.

A "reload" button 408 enables a user to reload the web contents from the web server to update the currently displayed web contents in the content display area 401.

A "home" button 409 enables a user to immediately display the web contents of a home address when the user previously designates and registers a specific URL address as the home address.

When a "print" button 410 is pressed by a user, a setting instruction screen is displayed to enable the user to input settings for printing the currently displayed web contents in the content display area 401.

When a user presses a "favorites" button 411, the user can select one of a plurality of URL previously designated by the user. The web contents acquired from a web server designated with the selected URL address can be displayed on a screen.

When a "menu" button 412 is pressed by a user, a menu screen is displayed to enable the user to perform display settings and operation settings relating to a web browser.

The web browser displays character strings 413 through 415 corresponding to the HTML text strings 301 through 303 illustrated in Fig. 5. The PDF files illustrated in Fig. 5 are linked to character strings "confidential document", "print document", and "catalog", respectively.

When a user selects one of these character strings, a PDF file allocated to the selected character string is designated as a link destination. The PDF file can be acquired from a web server that stores the PDF file. Each underlined character string indicates that a link is allocated to this character string.

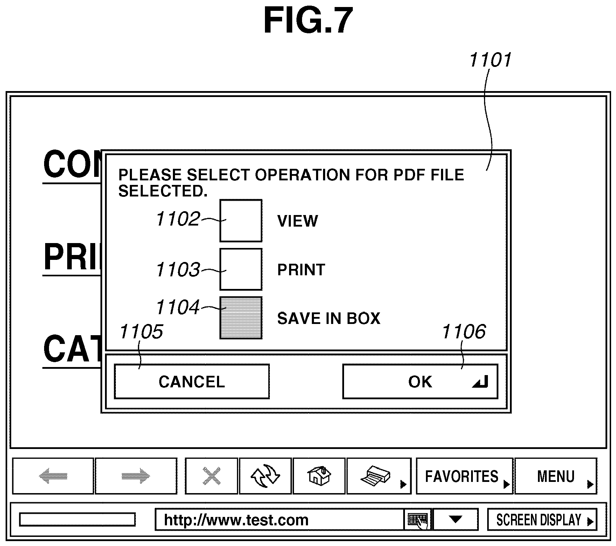

Fig. 7 illustrates an exemplary screen displayed when any one of the character strings 413 through 415 is selected by a user.

An instruction selection dialog 1101 enables a user to instruct various operations for a PDF file relating to a designated character string.

A "view instruction" button 1102 enables a user to instruct displaying the contents of an acquired PDF file.

A "print instruction" button 1103 enables a user to instruct printing the acquired PDF file by the printer 119.

A "save instruction" button 1104 enables a user to instruct saving the acquired PDF file into a box area of the HDD 104.

A cancel button 1105 enables a user to cancel a PDF file operation instruction and close the instruction selection dialog 1101.

An OK button 1106 enables a user to finalize the instruction input through any one of the "view instruction" button 1102, the "print instruction" button 1103, and the "save instruction" button 1104. Furthermore, the OK button 1106 enables a user to instruct execution of the selected operation. The OK button 1106 does not accept any input operation before a user presses one of the "view instruction" button 1102, the "print instruction" button 1103, and the "save instruction" button 1104.

In this manner, a user can freely select processing to be performed on an acquired PDF file. In the present exemplary embodiment, a user can simultaneously select two or more operations corresponding to the "view instruction" button 1102, the "print instruction" button 1103, and the "save instruction" button 1104.

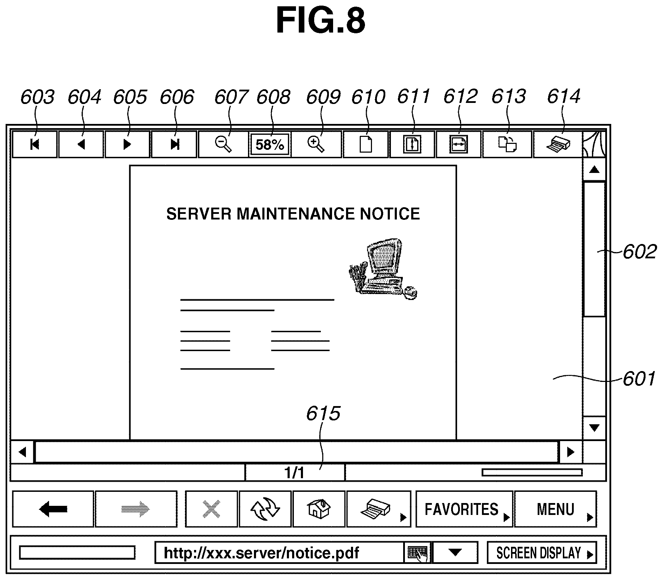

Fig. 8 illustrates an exemplary screen displayed when a user selects the "view instruction" button 1102 and presses the OK button 1106 on the operation screen illustrated in Fig. 7.

A PDF file content display area 601 displays the contents of a designated PDF file.

A scroll bar 602 enables a user to scroll the contents displayed in the content display area 601 when at least part of the PDF file is not displayed in the content display area 601.

A "head page" button 603 enables a user to instruct displaying a head page of a currently displayed PDF file.

A "previous page" button 604 enables a user to instruct displaying a page previous to the PDF file page currently displayed in the content display area 601.

A "next page" button 605 enables a user to instruct displaying a page subsequent to the PDF file page currently displayed in the content display area 601.

A "final page" button 606 enables a user to instruct displaying a final page of the currently displayed PDF file.

A zoom-out button 607 enables a user to instruct displaying a reduced image of the PDF file page currently displayed in content display area 601.

A magnification display area 608 displays a magnification of the PDF file page currently displayed in the content display area 601.

A zoom-in button 609 enables a user to instruct displaying a magnified image of the PDF file page currently displayed in the content display area 601.

A "100% display magnification" button 610 enables a user to instruct returning the magnification of the PDF file page displayed in the content display area 601 to 100%.

A "longitudinal width fitting" button 611 enables a user to instruct automatically setting a display magnification so that a longitudinal width of the PDF file page displayed in the content display area 601 just fits to the longitudinal width of the content display area 601.

A "lateral width fitting" button 612 enables a user to instruct automatically setting a display magnification so that a lateral width of the PDF file page displayed in the content display area 601 just fits to the lateral width of the content display area 601.

A "page rotation" button 613 enables a user to instruct rotating the PDF file page displayed in the content display area 601 by 90 degrees in the clockwise direction.

A print button 614 enables a user to instruct printing the currently displayed PDF file page.

A "page number display" area 615 displays a total page number of the currently displayed PDF file and a page number of the PDF file page currently displayed in the content display area 601.

As described above, the screen illustrated in Fig. 6 displays the contents of an actual PDF file.

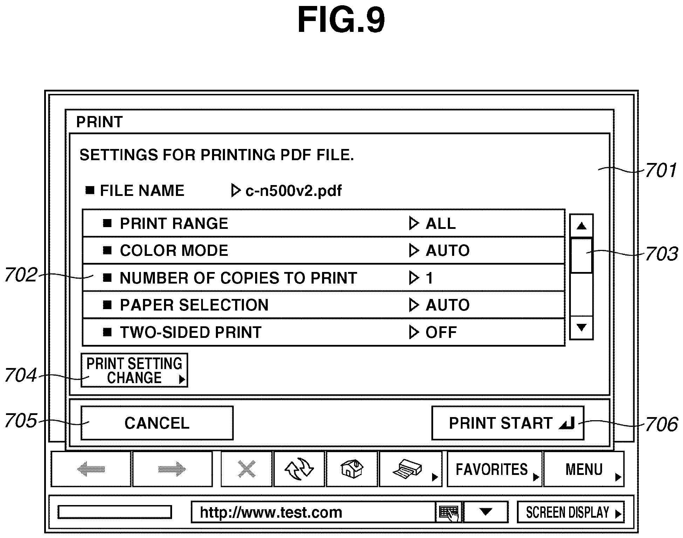

Fig. 9 illustrates an exemplary screen displayed when a user selects the "print instruction" button 1103 and presses the OK button 1106 on the operation screen illustrated in Fig. 7.

The screen illustrated in Fig. 9 can be also displayed when a user selects the print button 614 on the operation screen illustrated in Fig. 8.

A print setting screen 701 enables a user to set and confirm various print conditions (e.g., color print designation, two-sided print designation, N-up print designation, staple designation, and sheet size designation) for printing a designated PDF file. After confirming the print conditions, the user can instruct the print processing to start.

A "print condition display" area 702 displays print conditions (e.g., print range, color mode, number of copies, sheet selection, and two-sided print) for printing a PDF file.

A scroll bar 703 enables a user, when at least one portion of the print conditions is not displayed in the print condition display area 702, to scroll to view the contents displayed in the other portion of the print condition display area 702.

A "print setting change" button 704 enables a user to change the print conditions displayed in the print condition display area 702. When a user selects the "print setting change" button 704, a print setting change screen is displayed so that the user can change print conditions.

A cancel button 705 enables a user to cancel a PDF file print instruction and close the print setting screen 701.

A "print start" button 706 enables a user to start printing a PDF file based on the print conditions displayed in the print condition display area 702.

As described above, the operation screen illustrated in Fig. 7 enables a user to confirm and change print conditions for a PDF file and instruct printing the PDF file.

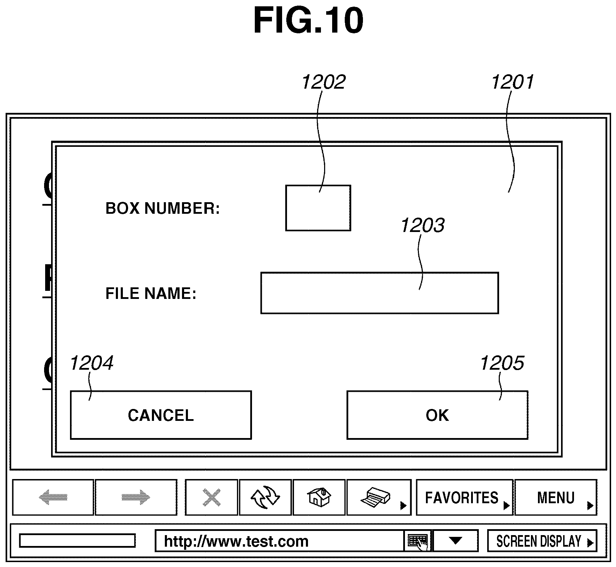

Fig. 10 illustrates an exemplary screen displayed when a user selects the "save instruction" button 1104 and presses the OK button 1106 on the operation screen illustrated in Fig. 7.

A box saving setting dialog display 1201 enables a user to input box saving settings and save a PDF into a designated box.

A box number designation field 1202 enables a user to designate a box number as a storage destination where a PDF file is stored. For example, box numbers "00" to "99" can be allocated to the box areas in the HDD 104.

A file name designation field 1203 enables a user to designate a file name of a PDF file to be stored in the box area designated by the box number in box number designation field 1202.

A cancel button 1204 enables a user to cancel a box saving operation instruction and close the box saving setting dialog display 1201.

An OK button 1205 enables a user to finalize the instructions designated via the box saving setting dialog 1201 and store the PDF file into the designated box area.

A device incorporated in the image processing apparatus may not be able to manage files in the HDD 104. If it is difficult to directly store a PDF file, the PDF file can be converted into JPEG or JBIG file data and stored in a box.

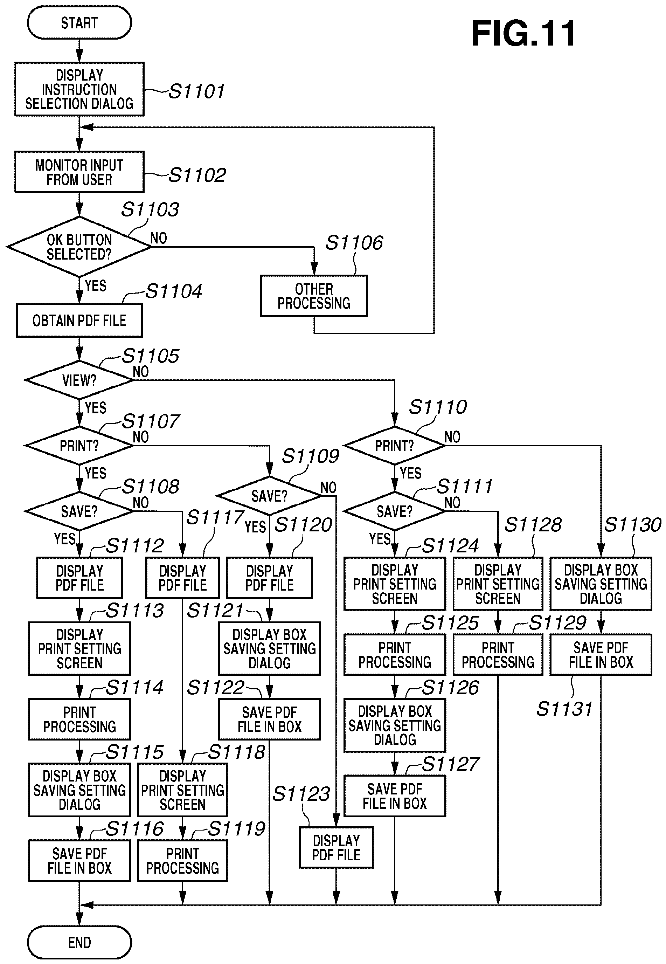

Fig. 11 is a flow chart illustrating a sequential operation performed by the image processing apparatus according to the present exemplary embodiment. More specifically, after the instruction selection dialog 1101 illustrated in Fig. 7 is displayed, the image processing apparatus performs the processing relating to a PDF file according to the flow chart illustrated in Fig. 11. Each step of the flow chart illustrated in Fig. 11 can be executed by the CPU 101 of the image processing apparatus according to a program stored in the HDD 104 or the ROM 103.

In step S1101, the CPU 101 causes the operation unit 106 to display the instruction selection dialog 1101 illustrated in Fig. 7. Then, in step S1102, the CPU 101 monitors an instruction input from a user.

In step S1103, the CPU 101 determines whether a user has pressed the OK button 1106. If the CPU 101 determines that the OK button 1106 is pressed (yes in step S1103), the processing flow advances to step S1104. If the CPU 101 determines that the OK button 1106 is not pressed (no in step S1103), the processing flow advances to step 1106. In step 1106, the CPU 101 executes other processing.

In step S1104, the CPU 101 acquires a PDF file associated with a link tag from a web server.

In step S1105, the CPU 101 determines whether the "view instruction" button 1102 is selected via the instruction selection dialog 1101 illustrated in Fig. 7. Then, in steps S1107 and S1110, the CPU 101 determines whether the "print instruction" button 1103 is selected via the instruction selection dialog 1101 illustrated in Fig. 7. Furthermore, in steps S1108, S1109, and S1111, the CPU 101 determines whether the "save instruction" button 1104 is selected via the instruction selection dialog 1101 illustrated in Fig. 7.

If the CPU 101 determines that all of "view", "print", and "save" operations are selected, the processing flow advances to step S1112. If the CPU 101 determines that the "view" and "print" operations are selected and the "save" operation is not selected, the processing flow advances to step S1117. If the CPU 101 determines that the "view" and "save" operations are selected and the "print" operation is not selected, the processing flow advances to step S1120.

If the CPU 101 determines that only the "view" operation is selected, the processing flow advances to step S1123. If the CPU 101 determines that the "print" and "save" operations are selected and the "view" operation is not selected, the processing flow advances to step S1124. If the CPU 101 determines that only the "print" operation is selected, the processing flow advances to step S1128. If the CPU 101 determines that only the "save" operation is selected, the processing flow advances to step S1130.

When all of the "view", "print", and "save" operations are selected, the CPU 101 performs the processing of steps S1112 through S1116. In step S1112, the CPU 101 causes the operation unit 106 to display a PDF file acquired in step S1104 on the operation screen illustrated in Fig. 8. Then, in step S1113, the CPU 101 causes the operation unit 106 to display the print setting screen illustrated in Fig. 9. When a user completes print settings and presses the print start button 706, the processing flow advances to step S1114.

In step S1114, the printer 119 performs printing the PDF file acquired in step S1104 according to the determined print settings. In step S1115, the CPU 101 causes the operation unit 106 to display the box saving setting dialog on the operation screen illustrated in Fig. 10. When a user inputs a box number and a file name and presses the OK button 1205, the processing flow advances to step S1116. In step S1116, the CPU 101 stores the PDF file acquired in step S1104 into a designated box area of the HDD 104.

In this case, the CPU 101 can also store the print setting values input in step S1113 associated with the PDF file stored in the box area. When a user instructs printing the PDF file stored in the box again, the stored print setting values can be displayed on the print setting screen. Thus, the user is not required to input print setting values every time the user instructs printing the same PDF file.

When the "view" and "print" operations are selected and the "save" operation is not selected, the CPU 101 performs the processing of steps S1117 through S1119. In step S1117, the CPU 101 causes the operation unit 106 to display the PDF file acquired in step S1104 on the operation screen illustrated in Fig. 8. Then, in step S1118, the CPU 101 causes the operation unit 106 to display the print setting screen as illustrated in Fig. 9. When a user completes print settings and presses the print start button 706, the processing flow advances to step S1119. In step S1119, the printer 119 performs printing the PDF file acquired in step S1104 according to the determined print settings.

When the "view" and "save" operations are selected and the "print" operation is not selected, the CPU 101 performs the processing of steps S1120 through S1122. In step S1120, the CPU 101 causes the operation unit 106 to display the PDF file acquired in step S1104 on the operation screen as illustrated in Fig. 8. In step S1121, the CPU 101 causes the operation unit 106 to display the box saving setting dialog on the operation screen illustrated in Fig. 10. When a user inputs a box number and a file name and presses the OK button 1205, the processing flow advances to step S1122. In step S1122, the CPU 101 stores the PDF file acquired in step S1104 into a designated box area of the HDD 104.

When only the "view" operation is selected, the CPU 101 performs the processing of step S1123. In step S1123, the CPU 101 causes the operation unit 106 to display the PDF file acquired in step S1104 on the operation screen illustrated in Fig. 8.

When the "print" and "save" operations are selected and the "view" operation is not selected, the CPU 101 performs the processing of steps S1124 through S1127. In step S1124, the CPU 101 causes the operation unit 106 to display the print setting screen illustrated in Fig. 9. When a user completes print settings and presses the print start button 706, the processing flow advances to step S1125. In step S1125, the printer 119 performs printing the PDF file acquired in step S1104 according to the determined print settings. Instep S1126, the CPU 101 causes the operation unit 106 to display the box saving setting dialog on the operation screen illustrated in Fig. 10.

When a user inputs a box number and a file name and presses the OK button 1205, the processing flow advances to step S1127. In step S1127, the CPU 101 stores the PDF file acquired in step S1104 into a designated box area of the HDD 104. In this case, the CPU 101 can also store the print setting values input in step S1124 associated with the PDF file stored in the box area. When a user instructs printing the PDF file stored in the box again, the stored print setting values can be displayed on the print setting screen. Thus, a user is not required to input print setting values every time the user instructs printing the same PDF file.

When only the "print" operation is selected, the CPU 101 performs the processing of step S1128. In step S1128, the CPU 101 causes the operation unit 106 to display the print setting screen illustrated in Fig. 9. When a user completes print settings and presses the print start button 706, the processing flow advances to step S1129. In step S1129, the printer 119 prints the PDF file acquired in step S1104 according to the determined print settings.

When only the "save" operation is selected, the CPU 101 performs the processing of step S1130. In step S1130, the CPU 101 causes the operation unit 106 to display the box saving setting dialog on the operation screen illustrated in Fig. 10. When a user inputs a box number and a file name and presses the OK button 1205, the processing flow advances to step S1131. In step S1131, the CPU 101 stores the PDF file acquired in step S1104 into a designated box area of the HDD 104.

As described above, the image processing apparatus according to the present exemplary embodiment can acquire web contents from a web server via a network, display the acquired web contents, and perform the processing for viewing, printing, and saving a PDF file linked to the acquired web contents. The present exemplary embodiment enables a user to arbitrarily combine and select the processing to be executed. Furthermore, if the processing for printing and saving a PDF file is designated, the image processing apparatus can store print setting information associated with the stored PDF file. Thus, a user is not required to input print settings every time the user instructs printing of an intended PDF file.

### Second Exemplary Embodiment

According to the above-described first exemplary embodiment, a PDF file acquired from a web server can be viewed, printed, and saved. However, from the viewpoint of security, it is useful to restrict the processing performed on a file when the file includes confidential information. The exemplary contents for restricting the processing, such as "only viewing permitted" or "only viewing and printing permitted", are variable according to a security level.

The second exemplary embodiment provides an image processing apparatus which can restrict the processing performed on a file according to the setting contents when the data from a web server includes any settings restricting the processing.

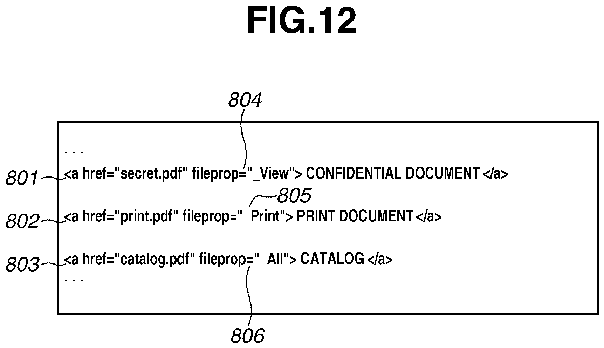

Fig. 12 illustrates exemplary data that the image processing apparatus can acquire from a web server according to the present exemplary embodiment.

Similar to the web content illustrated in Fig. 5, each exemplary HTML description of Fig. 12 indicates a link to a PDF file.

Similar to the text strings 301 through 303 illustrated in Fig. 5, each of the exemplary text strings 801 through 803 is linked to a PDF file using the <a> tag. The text strings 801 through 803 respectively include attribute values 804 through 806 designated thereto.

The capability of interpreting the attribute values described in the text strings 801 through 803 is limited to the image processing apparatus according to the present exemplary embodiment. Therefore, an ordinary web browser disregards these attribute values. The web contents illustrated in Fig. 12, when displayed on a screen, is the same as the web contents illustrated in Fig. 5.

The attribute value 804 indicates permission to view a PDF file in the text string 801. The attribute value 805 indicates permission to view and print a PDF file in the text string 802. The attribute value 806 indicates permission to view, print, and save a PDF file in the text string 803.

The image processing apparatus according to the present exemplary embodiment displays, according to the HTML contents of Fig. 12, an operation screen similar to the operation screen illustrated in Fig. 6.

The attribute values 804 through 805 illustrated in Fig. 12 do not have any effects on the contents displayed on the operation screen. However, the processing performed by the image processing apparatus is differentiated according to the attribute value when a user selects, via the operation screen, any one of the character strings 413 through 415 that are respectively linked to PDF files.

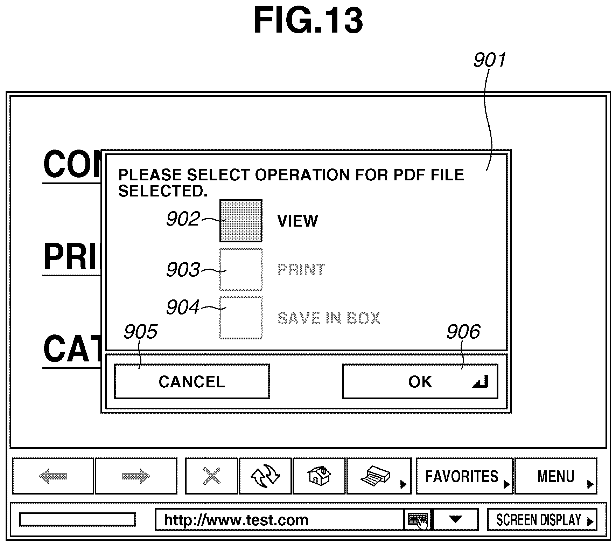

Fig. 13 illustrates an exemplary operation screen displayed when a user selects the displayed character string 413 equivalent to the character string 801 in the content display area 401 (refer to Fig. 6) of the operation screen that displays the HTML contents illustrated in Fig. 12. The operation screen illustrated in Fig. 13 includes an instruction selection dialog 901.

Similar to the instruction selection dialog 1101 illustrated in Fig. 7, the instruction selection dialog 901 enables a user to instruct an operation for a PDF file related to the designated character string.

A "view instruction" button 902 enables a user to instruct viewing the contents of a PDF file.

A "print instruction" button 903 enables a user to instruct printing a PDF file.

A "box save instruction" button 904 enables a user to instruct saving a PDF file into a specific area of the HDD 104.

A cancel button 905 enables a user to cancel a PDF file operation instruction and close the instruction selection dialog 901.

An OK button 905 enables a user to finalize the instruction input through any one of the instruction buttons 902 through 904 and execute the selected operation.

According to the example illustrated in Fig. 13, only the "view instruction" button 902 is selected and other buttons (i.e., the "print instruction" button 903 and the "box save instruction" button 904) are displayed in a gray-out pattern, which indicates that a user cannot operate the buttons.

More specifically, the attribute value 804 added to the character string 801 in Fig. 12 indicates permission only to view a PDF file in the text string 801. Therefore, the image processing apparatus enables a user to operate only the "view instruction" button 902 when the instruction selection dialog 901 is displayed. The user is only allowed to view the PDF file "secret.pdf" allocated to the displayed character string 413. For example, when a PDF file has higher confidentiality and printing the PDF file and saving the PDF file in other devices is prohibited, a web server can restrict the operations available to a user.

In Fig. 13, if a user selects the "view instruction" button 902 and presses the OK button 906, the image processing apparatus displays the PDF file content display screen illustrated in Fig. 8.

In this case, the user cannot select the "print instruction" button 614 (refer to Fig. 8) which is grayed out.

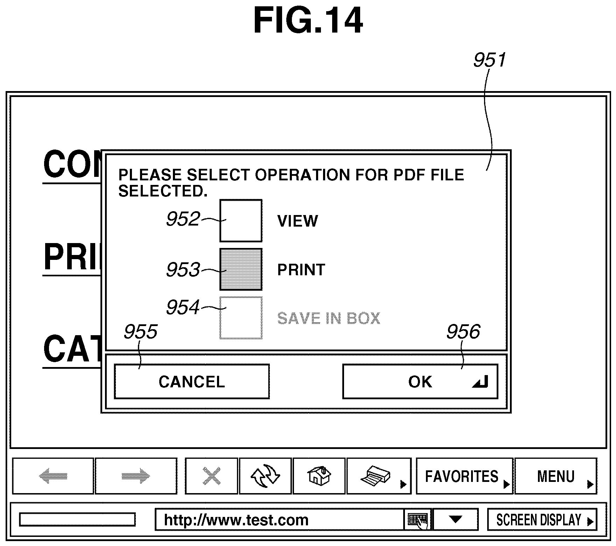

Fig. 14 illustrates an exemplary operation screen displayed when a user selects the displayed character string 414 corresponding to the character string 802, via the content display area 401 on the operation screen that displays the HTML contents illustrated in Fig. 12.

An instruction selection dialog display 951 having a plurality of buttons 952 through 956 illustrated in Fig. 14 are similar to the dialog display 901 and the buttons 902 through 906 illustrated in Fig. 13. According to the operation screen illustrated in Fig. 14, a user can select both the "view instruction" button 952 and the "print instruction" button 953 while the user cannot select the "box save instruction" button 954 which is grayed out.

In this case, the attribute value 805 added to the character string 802 in Fig. 12 indicates permission to view and print a PDF file in the text string 802. Therefore, the image processing apparatus enables a user to operate only the "view instruction" button 952 and the "print instruction" button 953 when the instruction selection dialog 951 is displayed.

Thus, a user is only allowed to view and print the PDF file "print.pdf" allocated to the displayed character string 414.

For example, when a PDF file includes chargeable print contents, a web server can restrict user's operations in such a way that the viewing and printing operations are permitted and the saving operation (i.e., electronic copy) is prohibited.

In Fig. 14, when a user selects the "view instruction" button 952 and presses the OK button 956, the image processing apparatus displays the PDF file content display screen illustrated in Fig. 8. Similarly, when a user selects the "print instruction" button 953 and presses the OK button 956, the image processing apparatus displays the print condition setting display screen illustrated in Fig. 9.

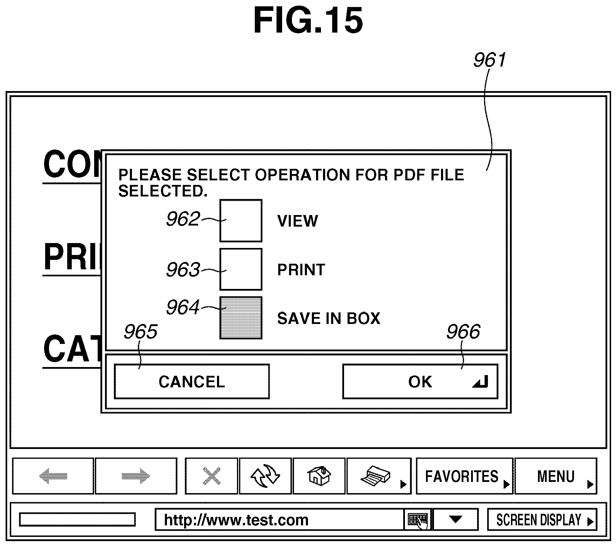

Fig. 15 illustrates an exemplary operation screen displayed when a user selects the displayed character string 415 corresponding to the character string 803, via the content display area 401 on the operation screen that displays the HTML contents illustrated in Fig. 12.

An instruction selection dialog 961 and a plurality of buttons 962 through 966 illustrated in Fig. 15 are similar to the dialog 901 and the buttons 902 through 906 illustrated in Fig. 13. According to the operation screen illustrated in Fig. 15, a user can select all of the "view instruction" button 962, the "print instruction" button 963, and the "box save instruction" button 964.

In this case, the attribute value 806 added to the character string 803 in Fig. 12 indicates permission to view, print, and save a PDF file in the text string 803. Therefore, the image processing apparatus allows a user to operate all the instruction buttons 962 through 964.

As described above, a web server can appropriately describe the web contents so as to restrict a client's operations performed on a PDF file according to the nature of each PDF file.

In Fig. 15, when a user selects the "view instruction" button 962 and presses the OK button 966, the image processing apparatus displays the PDF file content display screen illustrated in Fig. 8. Similarly, when a user selects the "print instruction" button 963 and presses the OK button 966, the image processing apparatus displays the print condition setting display screen illustrated in Fig. 9. Furthermore, when a user selects the "save instruction" button 964 and presses the OK button 966, the image processing apparatus displays the box saving setting dialog illustrated in Fig. 10.

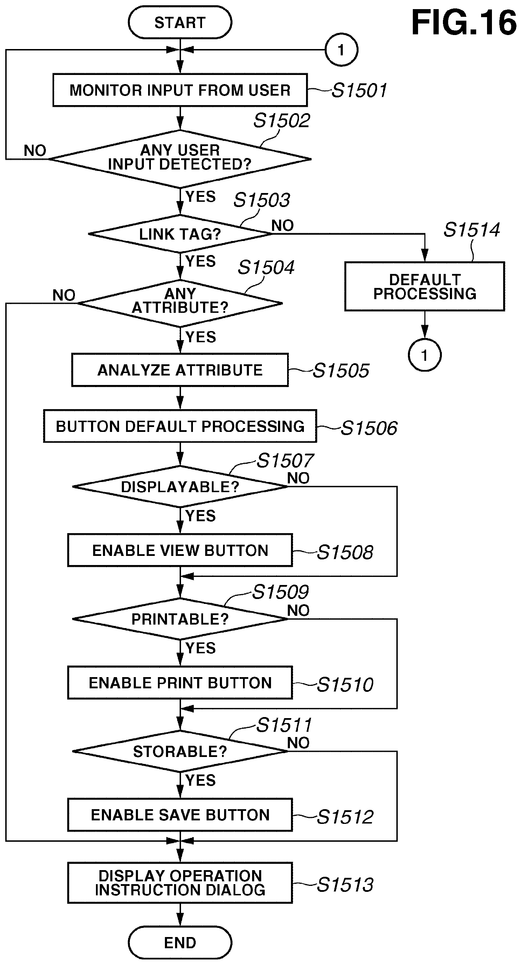

Fig. 16 is a flow chart illustrating a sequential operation performed by the image processing apparatus according to the second exemplary embodiment. More specifically, according to the flow chart illustrated in Fig. 16, the image processing apparatus acquires web contents from a web server via a network, and displays an operation instruction dialog display which enables a user to instruct an operation performed on a file linked to the acquired web contents. Each step of the flow chart illustrated in Fig. 16 can be executed by the CPU 101 of the image processing apparatus according to a program stored in the HDD 104 or the ROM 103.

In step S1501, the CPU 101 monitors an instruction input from a user via the operation unit 106.

In step S1502, the CPU 101 determines whether a user has input any instruction through the operation unit 106 of the image processing apparatus.

If CPU 101 determines that no instruction is input (NO in step S1502), the processing flow returns to step S1501 and the CPU 101 continues the processing for monitoring an instruction input from a user. If the CPU 101 determines that any instruction is input (YES in step S1502), the processing flow advances to step S1503. In step S1503, the CPU 101 determines whether the input instruction is related to a link tag. Namely, the CPU 101 determines whether a user has selected any one of the character strings 413 though 415 illustrated in Fig. 6.

If the CPU 101 determines that the input instruction is not related to a link tag (NO in step S1503), the processing flow advances to step S1514. In step S1514, the CPU 101 executes predetermined processing (i.e., processing other than the following link-related processing) which a user has selected with any one of the buttons. Thereafter, the processing flow returns to step S1501 and the CPU 101 continues the processing for monitoring an instruction input from a user.

If the CPU 101 determines that the input instruction is related to a link tag (YES in step S1503), the processing flow advances to step S1504. In step S1504, the CPU 101 determines whether the link tag has an attribute value that the image processing apparatus can recognize.

For example, when a user instructs the character string 413 illustrated in Fig. 6, the CPU 101 determines whether the character string 413 includes an attribute value equivalent to the attribute value 804 illustrated in Fig. 12.

If the CPU 101 determines that the link tag includes no attribute value (NO in step S1504), the processing flow advances to step S1513.

If the CPU 101 determines that the link tag includes an attribute value (YES in step S1504), the processing flow advances to step S1505. In step S1505, the CPU 101 analyzes the type of the attribute value.

In step S1506, the CPU 101 initializes the display settings in such a way that the buttons to be displayed in the operation instruction dialog are all disabled.

In step S1507, the CPU 101 determines whether the attribute value analyzed in step S1505 indicates permission to view a PDF file designated by the link tag. If the CPU 101 determines that the attribute value does not permit viewing a PDF file (NO in step S1507), the processing flow advances to step S1509. If the CPU 101 determines that the attribute value permits viewing a PDF file (YES in step S1507), the processing flow advances to step S1508. In step S1508, the CPU 101 changes the display settings so that a user can operate the "view instruction" button of the operation instruction dialog.

In step S1509, the CPU 101 determines whether the attribute value analyzed in step S1505 indicates permission to print a PDF file designated by the link tag. If the CPU 101 determines that the attribute value does not permit printing a PDF file (NO in step S1509), the processing advances to step S1511. If the CPU 101 determines that the attribute value permits printing a PDF file (YES in step S1509), the processing flow advances to step S1510. In step S1510, the CPU 101 changes the display settings so that a user can operate the "print instruction" button of the operation instruction dialog.

In step S1511, the CPU 101 determines whether the attribute value analyzed in step S1505 indicates permission to save a PDF file designated by the link tag. If the CPU 101 determines that the attribute value does not permit saving a PDF file (NO in step S1511), the processing advances to step S1513. If the CPU 101 determines that the attribute value permits saving a PDF file (YES in step S1511), the processing flow advances to step S1512. In step S1512, the CPU 101 changes the display settings so that a user can operate the "save instruction" button of the operation instruction dialog.

In step S1513, the CPU 101 actually displays the operation instruction dialog with the operation instruction button(s) which are enabled through the processing of steps S1505 to S1512 according to the attribute value added to the link tag. Thus, user's operations on the operation instruction dialog can be appropriately restricted.

After the operation instruction dialog is displayed, the image processing apparatus performs an operation similar to steps S1102 through S1131 illustrated in the flow chart of Fig. 11.

As described above, from the viewpoint of security, the present exemplary embodiment can restrict the processing of an image processing apparatus when a file includes confidential information. The exemplary contents for restricting the processing, such as "only viewing permitted" or "only viewing and printing permitted", are variable depending on a security level. According to the present exemplary embodiment, when the web contents from a web server include any settings restricting the processing, the image processing apparatus restricts the processing to be performed on a designated file according to the settings included in the web contents.

### Third Exemplary Embodiment

The attribute values added to link destination documents are not limited to the examples 804 through 806 illustrated in Fig. 12, and therefore can be arbitrarily determined between a client and a server.

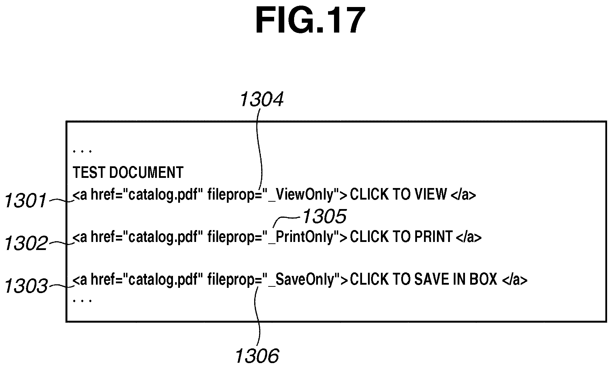

Fig. 17 illustrates exemplary web contents that the image processing apparatus can acquire from a web server according to the present exemplary embodiment.

Similar to the web contents illustrated in Figs. 5 and 12, each exemplary HTML description illustrated in Fig. 17 indicates a link to a PDF file.

Similar to the text strings 801 through 803 illustrated in Fig. 12, each of exemplary text strings 1301 through 1303 is linked to a PDF file using the <a> tag. The text strings 1301 through 1303 respectively include attribute values 1304 through 1306 designated thereto, which are different from the attribute values 801 through 803 illustrated in Fig. 12.

The attribute value 1304 indicates that only viewing a PDF file described in the text string 1301 is permitted. The attribute value 1305 indicates that only printing a PDF file described in the text string 1302 is permitted. The attribute value 1306 indicates that only saving a PDF file described in the text string 1303 is permitted. The capability of interpreting the attribute values in the text strings 1301 through 1303 is limited to the image processing apparatus according to the present exemplary embodiment. Therefore, an ordinary web browser disregards these attribute values.

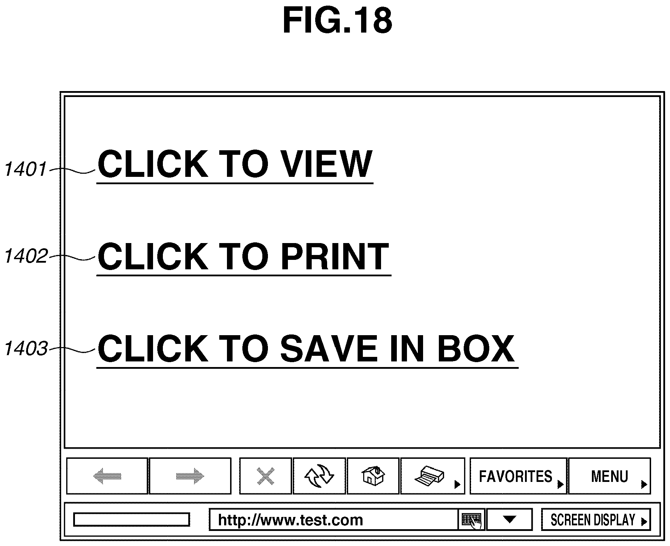

Fig. 18 illustrates an exemplary operation screen according to the HTML contents illustrated in Fig. 17, which can be displayed by the image processing apparatus according to the present exemplary embodiment.

Similar to the operation screen of Fig. 6 displaying the web contents illustrated in Fig. 5, the operation screen illustrated in Fig. 18 includes character strings 1401 through 1403, which are equivalent to the web contents 1301 through 1303 illustrated in Fig. 17. The text strings 1301 through 1303 respectively include the attributes 1304 through 1306 designated thereto.

When a user selects the character string 1401, the user is only allowed to view the PDF file linked to the character string 1401 according to the above-described attribute. Therefore, the image processing apparatus displays the PDF content display screen illustrated in Fig. 8, without displaying the instruction selection dialog 901 illustrated in Fig. 13.

When a user selects the character string 1402, the user is only allowed to print the PDF file linked to the character string 1402. Therefore, the image processing apparatus displays the print instruction screen illustrated in Fig. 9. Similarly, when a user selects the character string 1403, the user is only allowed to save the PDF file linked to the character string 1403. Therefore, the image processing apparatus displays the box saving setting dialog illustrated in Fig. 10.

As described above, when an operation is restricted according to an attribute value, user's selection operations become simple and a user can directly perform an intended operation. Thus, the present exemplary embodiment can improve the operability.

Furthermore, a creator of web contents can flexibly change the contents of a PDF file displayed by a web browser or the contents of a PDF file to be printed. Thus, the present exemplary embodiment enables a web server to provide a variety of files and can improve the operability.

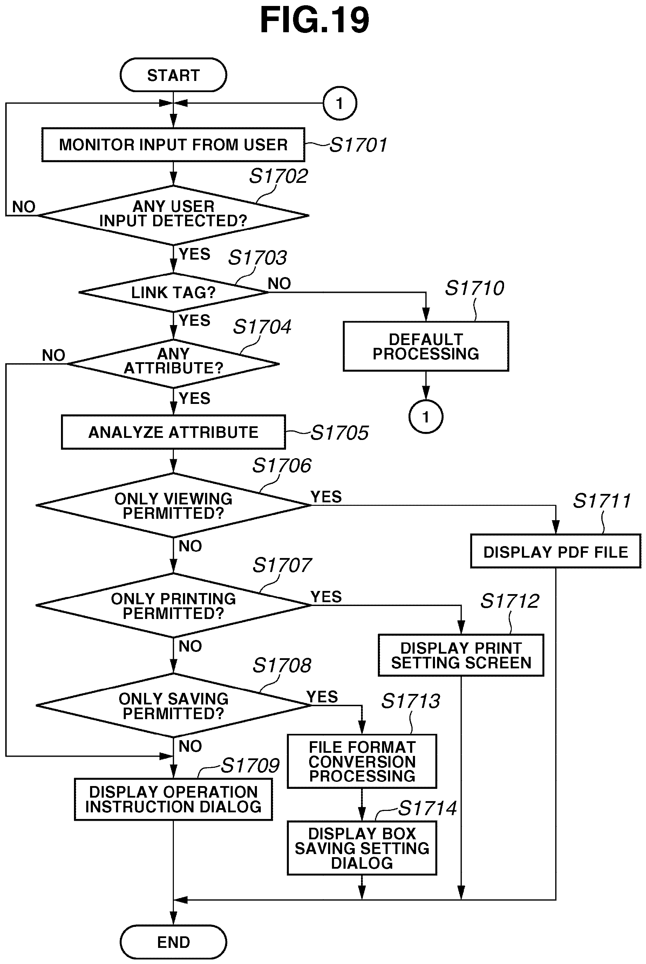

Fig. 19 is a flow chart illustrating a sequential operation performed by the image processing apparatus according to the present exemplary embodiment. Each step of the flow chart illustrated in Fig. 19 can be executed by the CPU 101 of the image processing apparatus according to a program stored in the HDD 104 or the ROM 103.

Hereinbelow, the processing different from the processing illustrated in the flow chart in Fig. 16 will be mainly described. The processing of steps S1701 through S1705 is similar to the processing of steps S1501 through S1505 illustrated in Fig. 16. The processing of step S1710 is similar to the processing of step S1514 illustrated in Fig. 16.

In step S1705, the CPU 101 analyzes the attribute value. In step S1706, the CPU 101 determines whether the attribute value analyzed in step S1705 permits only viewing a PDF file.

If the CPU 101 determines that the analyzed attribute value permits only viewing a PDF file (YES in step S1706), the processing flow advances to step S1711. In step S1711, the CPU 101 downloads a PDF file and causes the operation unit 106 to display the PDF content display screen illustrated in Fig. 8.

If the CPU 101 determines that the analyzed attribute value is not an attribute value that permits only viewing a PDF file (NO in step S1706), the processing flow advances to step S1707. In step S1707, the CPU 101 determines whether the analyzed attribute value permits only printing a PDF file. If the CPU 101 determines that the analyzed attribute value permits only printing a PDF file (YES in step S1707), the processing flow advances to step S1712. In step S1712, the CPU 101 downloads a PDF file and causes the operation unit 106 to display the print setting screen illustrated in Fig. 9.

If the CPU 101 determines that the analyzed attribute value is not an attribute value that permits only printing a PDF file (NO in step S1707), the processing flow advances to step S1708. In step S1708, the CPU 101 determines whether the analyzed attribute value permits only saving a PDF file. If the CPU 101 determines that the analyzed attribute value permits only saving a PDF file (YES in step S1708), the processing flow advances to step S1713. In step S1713, the CPU 101 downloads a PDF file and, if necessary, performs PDF file format conversion processing. Then, in step S1714, the CPU 101 displays a box saving setting dialog.

If the CPU 101 determines that the analyzed attribute value is not an attribute value that permits only saving a PDF file (NO in step S1708), the processing flow advances to step S1709. In step S1709, the CPU 101 causes the operation unit 106 to display an operation instruction dialog.

Similar to the second and third exemplary embodiments, the capability of interpreting the attribute values illustrated in Figs. 12 and 17 is limited to the image processing apparatus according to the present exemplary embodiment.

Therefore, if a web server receives a request from a client to acquire web contents, the web server performs processing for determining whether the client can interpret an attribute value according to, for example, a UserAgent value.

Furthermore, to prevent any third person or third party from analyzing the network communications and altering the attribute values for the purpose of abuse, it is useful that a web server and a client perform encrypted communications according to Secure Sockets Layer (SSL) technology, or the like.

Moreover, the processing of the exemplary embodiments can be applied to any web contents provided from a web server other than the above-described PDF files linked to the web contents.

Furthermore, the present invention can also be achieved by providing a system or a device with a storage medium (or a recording medium) which stores program code of software implementing the functions of the embodiments and by reading and executing the program code stored in the storage medium with a computer of the system or the device (a CPU or a micro processing unit (MPU)).

In this case, the program code itself, which is read from the storage medium, implements the functions of the embodiments mentioned above, and accordingly, computer program and/or the storage medium storing the program code constitutes the present invention. As the storage medium for supplying such program code, a floppy disk, a hard disk, an optical disk, a magneto-optical disk, a compact disk read only memory (CD-ROM), a compact disk recordable (CD-R), a digital versatile disk read only memory (DVD-ROM), a magnetic tape, a nonvolatile memory card, and a read only memory (ROM), for example, can be used.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A multifunction peripheral comprising:
a display unit (206) having a touch panel (203);
first display control means (101) configured to cause the display unit (206) to display a screen generated based on hypertext data acquired from a server on a network;
third display control means (101) configured to cause the display unit (206) to display (601) data based on the hypertext data, in a case where the user selects an instruction to display;
printing means (119) configured to print data based on the hypertext data, in a case where the user selects an instruction to print; and
storage means (104) configured to store data based on the hypertext data,
**characterized in that** the multifunction peripheral further comprises:
second display control means (101) configured to, in a case where the hypertext data includes a link to a predetermined format file, in response to a user's one touch on a display part corresponding to the link using the touch panel (203), identify the predetermined format file corresponding to the link and cause the display unit to, without displaying the predetermined format file corresponding to the link, display a selection screen (1101, 901, 961) enabling the user to input, via the touch panel (203), an instruction to display (1102, 902, 962), an instruction to print (1103, 903, 963), or an instruction to store the predetermined format file (1104, 904, 964) corresponding to the link;
wherein:
in a case where the user selects the instruction to display via the selection screen (1101, 901, 961) displayed by the second display control means, the third display control means (101) is configured to cause the display unit (206) to display (601) the predetermined format file corresponding to the link;
in a case where the user selects the instruction to print via the selection screen (1101, 901, 961) displayed by the second display control means, the printing means (119) is configured to print the predetermined format file corresponding to the link;
in a case where the user selects the instruction to store via the selection screen (1101, 901, 961) displayed by the second display control means, the storage means (104) is configured to store the predetermined format file corresponding to the link, and
the selection screen (1101, 901, 961) is generated and displayed as part of the multifunction peripheral.

2. The multifunction peripheral according to claim 1, further comprising a fourth display control means configured to control the display unit to display a second screen that enables the user to designate an area for storing the predetermined format file corresponding to the link, in a case where the user inputs the instruction to store, via the selection screen (1101, 901, 961) displayed by the second display control means.

3. The multifunction peripheral according to claim 1, further comprising a fifth display control means configured to control the display unit to display a third screen that enables the user to designate print settings, in a case where the user inputs the instruction to print, via the selection screen (1101, 901, 961) displayed by the second display control means.

4. The multifunction peripheral according to claim 3, wherein said storage means is configured to store the predetermined format file corresponding to the link associated with the print settings designated by the user via the third screen displayed by the fifth display control means, in a case where the user inputs the instruction to print and the instruction to store, via the selection screen (1101, 901, 961) displayed by the second display control means.

5. The multifunction peripheral according to claim 1, further comprising a determination means configured to determine whether the predetermined format file corresponding to the link is permitted to display, print, and store, wherein the second display control means changes a display pattern of the selection screen (1101, 901, 961) so that the user cannot select any processing identified as being not permitted by the determination means.

6. The multifunction peripheral according to claim 5, wherein the second display control means performs a gray-out display that indicates the processing identified as being not permitted by the determination means.

7. The multifunction peripheral according to claim 5, wherein the determination means performs the determination by analyzing the hypertext data acquired from the server.

8. The multifunction peripheral according to either one of claims 1 through 7, wherein the predetermined format file corresponding to the link is a portable document format (PDF) file.

9. A method for controlling a multifunction peripheral, comprising:
causing a display unit (206) to display a screen generated based on hypertext data acquired from a server via a network;
causing the display unit to display data based on the hypertext data, in a case where the user inputs an instruction to display;
causing a printing unit (119) to print data based on the hypertext data, in a case where the user inputs an instruction to print; and
storing data based on the hypertext data,
**characterized in that** the method further comprises:
causing the display unit, in a case where the hypertext data includes a link to a predetermined format file, in response to a user's one touch on a display part corresponding to the link using the touch panel, to identify the predetermined format file corresponding to the link, and without displaying the predetermined format file corresponding to the link, display a selection screen (1101, 901, 961) enabling the user to input, via the touch panel, an instruction to display (1102, 902, 962) the predetermined format file corresponding to the link, an instruction to print (1103, 903, 963) the predetermined format file corresponding to the link or an instruction to store (1104, 904, 964) the predetermined format file corresponding to the link;
wherein:
in a case where the user inputs the instruction to display via the selection screen (1101, 901, 961), the display unit displays the predetermined format file corresponding to the link;
in a case where the user inputs the instruction to print via the selection screen (1101, 901, 961), the printing unit (119) prints the predetermined format file corresponding to the link,
in a case where the user inputs the instruction to store via the selection screen (1101, 901, 961), the predetermined format file corresponding to the link is stored, and
the selection screen (1101, 901, 961) is generated and displayed as part of the multifunction peripheral.

10. A program which when loaded into a programmable image processing apparatus and executed performs a method as claimed in claim 9.

11. A storage medium storing a program as claimed in claim 10.

## Patentansprüche

1. Multifunktionsperipherievorrichtung, umfassend:
eine Anzeigeeinheit (206) mit einem Berührungsfeld (203);
eine erste Anzeigesteuereinrichtung (101), die konfiguriert ist, die Anzeigeeinheit (206) zu veranlassen, einen basierend auf von einem Server auf einem Netz erfassten Hypertextdaten erzeugten Bildschirm anzuzeigen;
eine dritte Anzeigesteuereinrichtung (101), die konfiguriert ist, die Anzeigeeinheit (206) zu veranlassen, auf den Hypertextdaten basierende Daten anzuzeigen (601), falls der Benutzer eine Anweisung zum Anzeigen auswählt;
eine Druckeinrichtung (119), die konfiguriert ist zum Drucken von auf den Hypertextdaten basierenden Daten, falls der Benutzer eine Anweisung zum Drucken auswählt; und
eine Speichereinrichtung (104), die konfiguriert ist zum Speichern von auf den Hypertextdaten basierenden Daten,
**gekennzeichnet dadurch, dass** die Multifunktionsperipherievorrichtung ferner umfasst:
eine zweite Anzeigesteuereinrichtung (101), die konfiguriert ist, falls die Hypertextdaten eine Verknüpfung zu einer vorbestimmten Formatdatei enthalten, ansprechend auf eine Berührung von einem Benutzer auf einem der Verknüpfung entsprechenden Anzeigeteil unter Verwendung des Berührungsfeldes (203) die der Verknüpfung entsprechenden vorbestimmte Formatdatei zu identifizieren und die Anzeigeeinheit zu veranlassen, ohne Anzeigen der der Verknüpfung entsprechenden vorbestimmten Formatdatei einen Auswahlbildschirm (1101, 901, 961) anzuzeigen, der es dem Benutzer ermöglicht, über das Berührungsfeld (203) eine Anweisung zum Anzeigen (1102, 902, 962), eine Anweisung zum Drucken (1103, 903, 963) oder eine Anweisung zum Speichern (1104, 904, 964) der der Verknüpfung entsprechenden vorbestimmten Formatdatei einzugeben;
wobei:
falls der Benutzer die Anweisung zum Anzeigen über den durch die zweite Anzeigesteuereinrichtung angezeigten Auswahlbildschirm (1101, 901, 961) auswählt, die dritte Anzeigesteuereinrichtung (101) konfiguriert ist, die Anzeigeeinheit (206) zu veranlassen, die der Verknüpfung entsprechenden vorbestimmte Formatdatei anzuzeigen (601);
falls der Benutzer die Anweisung zum Drucken über den durch die zweite Anzeigesteuereinrichtung angezeigten Auswahlbildschirm (1101, 901, 961) auswählt, die Druckeinrichtung (119) konfiguriert ist, die der Verknüpfung entsprechenden vorbestimmte Formatdatei zu drucken;
falls der Benutzer die Anweisung zum Speichern über den durch die zweite Anzeigesteuereinrichtung angezeigten Auswahlbildschirm (1101, 901, 961) auswählt, die Speichereinrichtung (104) konfiguriert ist, die der Verknüpfung entsprechenden vorbestimmte Formatdatei zu speichern, und
der Auswahlbildschirm (1101, 901, 961) als Teil der Multifunktionsperipherievorrichtung erzeugt und angezeigt wird.

2. Multifunktionsperipherievorrichtung nach Anspruch 1, ferner umfassend eine vierte Anzeigesteuereinrichtung, die konfiguriert ist zum Steuern der Anzeigeeinheit, einen zweiten Bildschirm anzuzeigen, der es dem Benutzer ermöglicht, ein Gebiet zum Speichern der der Verknüpfung entsprechenden vorbestimmten Formatdatei zu bestimmen, falls der Benutzer die Anweisung zum Speichern über den durch die zweite Anzeigesteuereinrichtung angezeigten Auswahlbildschirm (1101, 901, 961) eingibt.

3. Multifunktionsperipherievorrichtung nach Anspruch 1, ferner umfassend eine fünfte Anzeigesteuereinrichtung, die konfiguriert ist zum Steuern der Anzeigeeinheit, einen dritten Bildschirm anzuzeigen, der es dem Benutzer ermöglicht, Druckeinstellungen zu bestimmen, falls der Benutzer die Anweisung zum Drucken über den durch die zweite Anzeigesteuereinrichtung angezeigten Auswahlbildschirm (1101, 901, 961) eingibt.

4. Multifunktionsperipherievorrichtung nach Anspruch 3, wobei die Speichereinrichtung konfiguriert ist zum Speichern der der Verknüpfung entsprechenden vorbestimmten Formatdatei, die den Druckeinstellungen zugeordnet ist, welche durch den Benutzer über den durch die fünfte Anzeigesteuereinrichtung angezeigten dritten Bildschirm bestimmt werden, falls der Benutzer die Anweisung zum Drucken und die Anweisung zum Speichern über den durch die zweite Anzeigesteuereinrichtung angezeigten Auswahlbildschirm (1101, 901, 961) eingibt.

5. Multifunktionsperipherievorrichtung nach Anspruch 1, ferner umfassend eine Bestimmungseinrichtung, die konfiguriert ist zum Bestimmen, ob es erlaubt ist, die der Verknüpfung entsprechenden vorbestimmte Formatdatei anzuzeigen, zu drucken oder zu speichern, wobei die zweite Anzeigesteuereinrichtung ein Anzeigemuster auf dem Auswahlbildschirm (1101, 901, 961) ändert, sodass der Benutzer keine derartige Verarbeitung auswählen kann, die durch die Bestimmungseinrichtung als nicht erlaubt identifiziert wurde.

6. Multifunktionsperipherievorrichtung nach Anspruch 5, wobei die zweite Anzeigesteuereinrichtung eine ausgegraute Anzeige durchführt, die die Verarbeitung angibt, die durch die Bestimmungseinrichtung als nicht erlaubt identifiziert wurde.

7. Multifunktionsperipherievorrichtung nach Anspruch 5, wobei die Bestimmungseinrichtung die Bestimmung durch Analyse der vom Server erfassten Hypertextdaten durchführt.

8. Multifunktionsperipherievorrichtung nach einem der Ansprüche von 1 bis 7, wobei die der Verknüpfung entsprechenden vorbestimmte Formatdatei eine PDF-Datei (Portable Document Format) ist.

9. Verfahren zum Steuern einer Multifunktionsperipherievorrichtung, umfassend:
Veranlassen einer Anzeigeeinheit (206), einen basierend auf über ein Netz von einem Server erfassten Hypertextdaten erzeugten Bildschirm anzuzeigen;
Veranlassen der Anzeigeeinheit, auf den Hypertextdaten basierende Daten anzuzeigen, falls der Benutzer eine Anweisung zum Anzeigen eingibt;
Veranlassen einer Druckeinheit (119), auf den Hypertextdaten basierende Daten zu drucken, falls der Benutzer eine Anweisung zum Drucken eingibt; und
Speichern von auf Hypertextdaten basierenden Daten,
**gekennzeichnet dadurch, dass** das Verfahren ferner umfasst:
Veranlassen der Anzeigeeinheit, falls die Hypertextdaten eine Verknüpfung zu einer vorbestimmten Formatdatei enthalten, ansprechend auf eine Berührung von einem Benutzer auf einem der Verknüpfung entsprechenden Anzeigeteil unter Verwendung des Berührungsfeldes die der Verknüpfung entsprechenden vorbestimmte Formatdatei zu identifizieren und ohne Anzeigen der der Verknüpfung entsprechenden vorbestimmten Formatdatei einen Auswahlbildschirm (1101, 901, 961) anzuzeigen, der es dem Benutzer ermöglicht, über das Berührungsfeld eine Anweisung zum Anzeigen (1102, 902, 962) der der Verknüpfung entsprechenden vorbestimmten Formatdatei, eine Anweisung zum Drucken (1103, 903, 963) der der Verknüpfung entsprechenden vorbestimmten Formatdatei oder eine Anweisung zum Speichern (1104, 904, 964) der der Verknüpfung entsprechenden vorbestimmten Formatdatei einzugeben;
wobei:
falls der Benutzer die Anweisung zum Anzeigen über den Auswahlbildschirm (1101, 901, 961) eingibt, die Anzeigeeinheit die der Verknüpfung entsprechenden vorbestimmte Formatdatei anzeigt;
falls der Benutzer die Anweisung zum Drucken über den Auswahlbildschirm (1101, 901, 961) eingibt, die Druckeinheit (119) die der Verknüpfung entsprechenden vorbestimmte Formatdatei druckt,
falls der Benutzer die Anweisung zum Speichern über den Auswahlbildschirm (1101, 901, 961) eingibt, die der Verknüpfung entsprechenden vorbestimmte Formatdatei gespeichert wird, und
der Auswahlbildschirm (1101, 901, 961) als Teil der Multifunktionsperipherievorrichtung erzeugt und angezeigt wird.

10. Programm, das bei Laden in eine programmierbare Bildverarbeitungsvorrichtung und bei Ausführung ein Verfahren nach Anspruch 9 durchführt.

11. Speichermedium, das ein Programm nach Anspruch 10 speichert.

## Revendications

1. Périphérique multifonction comprenant :
une unité d'affichage (206) comportant un panneau tactile (203) ;
un premier moyen de commande d'affichage (101) configuré pour faire en sorte que l'unité d'affichage (206) affiche un écran généré sur la base de données hypertexte acquises en provenance d'un serveur sur un réseau ;
un troisième moyen de commande d'affichage (101) configuré pour faire en sorte que l'unité d'affichage (206) affiche (601) des données basées sur les données hypertexte dans un cas où l'utilisateur sélectionne une instruction d'affichage ;
un moyen d'impression (119) configuré pour imprimer des données basées sur les données hypertexte dans un cas où l'utilisateur sélectionne une instruction d'impression ; et
un moyen de stockage (104) configuré pour stocker des données basées sur les données hypertexte,
**caractérisé en ce que** le périphérique multifonction comprend en outre :
un deuxième moyen de commande d'affichage (101) configuré pour identifier dans un cas où les données hypertexte comportent un lien pointant sur un fichier de format prédéterminé, en réponse à un contact tactile d'un utilisateur sur une partie d'affichage correspondant au lien en utilisant le panneau tactile (203), le fichier de format prédéterminé correspondant au lien et faire en sorte que l'unité d'affichage affiche, sans afficher le fichier de format prédéterminé correspondant au lien, un écran de sélection (1101, 901, 961) permettant à l'utilisateur de saisir, par l'intermédiaire du panneau tactile (203), une instruction d'affichage (1102, 902, 962), une instruction d'impression (1103, 903, 963), ou une instruction de stockage du fichier de format prédéterminé (1104, 904, 964) correspondant au lien ;
dans lequel :
dans le cas où l'utilisateur sélectionne l'instruction d'affichage par l'intermédiaire de l'écran de sélection (1101, 901, 961) affiché par le deuxième moyen de commande d'affichage, le troisième moyen de commande d'affichage (101) est configuré pour faire en sorte que l'unité d'affichage (206) affiche (601) le fichier de format prédéterminé correspondant au lien ;
dans un cas où l'utilisateur sélectionne l'instruction d'impression par l'intermédiaire de l'écran de sélection (1101, 901, 961) affiché par le deuxième moyen de commande d'affichage, le moyen d'impression (119) est configuré pour imprimer le fichier de format prédéterminé correspondant au lien ;
dans un cas où l'utilisateur sélectionne l'instruction de stockage par l'intermédiaire de l'écran de sélection (1101, 901, 961) affiché par le deuxième moyen de commande d'affichage, le moyen de stockage (104) est configuré pour stocker le fichier de format prédéterminé correspondant au lien, et
l'écran de sélection (1101, 901, 961) est généré et affiché en tant que partie du périphérique multifonction.

2. Périphérique multifonction selon la revendication 1, comprenant en outre un quatrième moyen de commande d'affichage configuré pour commander l'unité d'affichage afin qu'elle affiche un deuxième écran qui permet à l'utilisateur de désigner une zone pour le stockage du fichier de format prédéterminé correspondant au lien dans un cas où l'utilisateur saisit l'instruction de stockage, par l'intermédiaire de l'écran de sélection (1101, 901, 961) affiché par le deuxième moyen de commande d'affichage.

3. Périphérique multifonction selon la revendication 1, comprenant en outre un cinquième moyen de commande d'affichage configuré pour commander l'unité d'affichage afin qu'elle affiche un troisième écran qui permet à l'utilisateur de désigner des réglages d'impression dans un cas où l'utilisateur saisit l'instruction d'impression, par l'intermédiaire de l'écran de sélection (1101, 901, 961) affiché par le deuxième moyen de commande d'affichage.

4. Périphérique multifonction selon la revendication 3, dans lequel ledit moyen de stockage est configuré pour stocker le fichier de format prédéterminé correspondant au lien associé aux réglages d'impression désignés par l'utilisateur par l'intermédiaire du troisième écran affiché par le cinquième moyen de commande d'affichage dans un cas où l'utilisateur saisit l'instruction d'impression et l'instruction de stockage, par l'intermédiaire de l'écran de sélection (1101, 901, 961) affiché par le deuxième moyen de commande d'affichage.

5. Périphérique multifonction selon la revendication 1, comprenant en outre un moyen de détermination configuré pour déterminer si le fichier de format prédéterminé correspondant au lien est autorisé à afficher, à imprimer et à stocker, dans lequel le deuxième moyen de commande d'affichage modifie le motif d'affichage de l'écran de sélection (1101, 901, 961) de façon que l'utilisateur ne puisse pas sélectionner de traitement identifié comme n'étant pas autorisé par le moyen de détermination.

6. Périphérique multifonction selon la revendication 5, dans lequel le deuxième moyen de commande d'affichage effectue un affichage en gris qui indique que le traitement identifié n'est pas autorisé par le moyen de détermination.

7. Périphérique multifonction selon la revendication 5, dans lequel le moyen de détermination effectue la détermination en analysant les données hypertexte acquises en provenance du serveur.

8. Périphérique multifonction selon l'une quelconque des revendications 1 à 7, dans lequel le fichier de format prédéterminé correspondant au lien est un fichier en format de document portable (PDF).

9. Procédé de commande d'un périphérique multifonction, consistant à :
faire en sorte qu'une unité d'affichage (206) affiche un écran généré sur la base de données hypertexte acquises en provenance d'un serveur par l'intermédiaire d'un réseau ;
faire en sorte que l'unité d'affichage affiche des données basées sur les données hypertexte dans un cas où l'utilisateur saisit une instruction d'affichage ;
faire en sorte qu'une unité d'impression (119) imprime des données basées sur les données hypertexte dans un cas où l'utilisateur saisit une instruction d'impression ; et
stocker des données basées sur les données hypertexte,
**caractérisé en ce que** le procédé consiste en outre à :
faire en sorte que l'unité d'affichage identifie dans un cas où les données hypertexte comportent un lien pointant sur un fichier de format prédéterminé, en réponse à un contact tactile d'un utilisateur sur une partie d'affichage correspondant au lien en utilisant le panneau tactile, le fichier de format prédéterminé correspondant au lien et sans afficher le fichier de format prédéterminé correspondant au lien, afficher un écran de sélection (1101, 901, 961) permettant à l'utilisateur de saisir, par l'intermédiaire du panneau tactile, une instruction d'affichage (1102, 902, 962) du fichier de format prédéterminé correspondant au lien, une instruction d'impression (1103, 903, 963) du fichier de format prédéterminé correspondant au lien, ou une instruction de stockage (1104, 904, 964) du fichier de format prédéterminé correspondant au lien ;
dans lequel :
dans un cas où l'utilisateur saisit l'instruction d'affichage par l'intermédiaire de l'écran de sélection (1101, 901, 961), l'unité d'affichage affiche le fichier de format prédéterminé correspondant au lien ;
dans un cas où l'utilisateur saisit l'instruction d'impression par l'intermédiaire de l'écran de sélection (1101, 901, 961), l'unité d'impression (119) imprime le fichier de format prédéterminé correspondant au lien,
dans un cas où l'utilisateur sélectionne l'instruction de stockage par l'intermédiaire de l'écran de sélection (1101, 901, 961), le fichier de format prédéterminé correspondant au lien est stocké, et
l'écran de sélection (1101, 901, 961) est généré et affiché en tant que partie du périphérique multifonction.

10. Programme qui, lorsqu'il est chargé dans un appareil de traitement d'image programmable et exécuté, met en oeuvre un procédé selon la revendication 9.

11. Support de stockage stockant un programme selon la revendication 10.
